# EUROPÄISCHE PATENTSCHRIFT

(11) **EP 1 795 330 B1**
(45) Veröffentlichungstag und Bekanntmachung des Hinweises auf die Patenterteilung: **04.01.2012**
(21) Anmeldenummer: 06023019.0
(22) Anmeldetag: 06.11.2006
(51) Int. Cl.: B29C 59/08, B05D 3/08

(54) **Verfahren und Vorichtung zur Kontrolle der Oberflächenaktivierung eines Kunstoffbauteils**
Process and device for controlling the surface activation of plastic parts
Procédé et dispositif pour le contrôle de l'activation de surface de pièces en matière plastique

(30) Priorität: 10.12.2005 DE 102005059095
(43) Veröffentlichungstag der Anmeldung: 13.06.2007
(73) Patentinhaber: Bayerische Motoren Werke Aktiengesellschaft, 80809 München (DE)
(72) Erfinder: Geiger, Martin, 84032 Altdorf (DE); Viehmann, Claudia, 56727 Mayen (DE)

(56) Entgegenhaltungen:
- DE-A1- 2 307 290
- DE-A1- 2 951 921
- DE-A1-102004 017 769
- DE-U1- 20 114 099
- ZENKIEWICS M: "FLAME MODIFICATION OF THE SURFACE LAYER OF PLASTICS PRODUCTS", INTERNATIONAL POLYMER SCIENCE AND TECHNOLOGY, RAPRA TECHNOLOGY, SHREWABURY, GB, vol. 27, no. 7, 1 January 2000 (2000-01-01), page T/86/T/93, XP000975407, ISSN: 0307-174X

## Beschreibung

Die Erfindung bezieht sich auf ein Verfahren zur Kontrolle der Oberflächenaktivierung eines Kunststoffbauteils nach dem Oberbegriff des Patentanspruchs,

Bestimmte Kunststoffe, insbesondere Polyolefine, weisen eine geringe Oberflächenspannung auf, was zu einer unzureichenden Haftung beispielsweise eines Lackes an einem Polyolefin-Bauteil führt. Es wird daher eine oberflächenaktivierung von Polyolefin-Bauteilen durch Beflammen mit einem Brenner durchgeführt. Dadurch werden verschiedenartige, vorwiegend sauerstoffhaltige funktionelle Gruppen an der Bauteilloberfläche erzeugt, die eine Erhöhung der Oberflächenenergie bewirken.

Die Beflammung wird im Wesentlichen durch die Parameter. Abstand der Flamme vom Bauteil, Dauer der Einwirkung der Flamme, Mischungsverhältnis Brenngas/Luft und Durchsatz des Brenngas/Luft-Gemisches bestimmt.

Diese Parameter werden bisher aufgrund empirischer Erfahrung gewählt. Um festzustellen, ob die gewählten Parameter zu einer ausreichand heben Oberflächenaktivierung führen, können sogenannte Testtinten (DIN 53 354) Verwendet werden. Dabei handelt es sich um Flüssigkeiten bekannter Oberflächenspannung, wird eine Flüssigkeit mit einer bestimmten Oberflächenspannung auf die beflammte Bauteiloberfläche mit einem Finsel dünn aufgebracht, so bleibt sie entweder flächig in Form eines Films liegen oder sie zieht sich zu Tröpfchen zusammen. Bleibt sie als Flüssigkeitsfilm liegen, ist die oberflächenspannung der oberfläche größer als die oberflächenspannung der Testtinte. Bei Tröpfchenbildung ist die Oberflächenspannung der oberfläche kleiner als die der Tinte. Um die oberflächenenergie des Kunststoffes zu bestimmen, sucht man unter Verwendung verschiedener Früfflussigkeiten nach der Früfflüssigkeit, die den Kunststoff gerade noch benetzt. Die Oberflächenspannung dieser Prüfflüssigkeit entspricht der Oberflächenspannung der Kunststoffoberfläche.

zur oberflächenaktivierung durch Beflammen im Serienprozess werden Beflasmroboter verwendet. Beim Einfahren des Beflammroboters wird mit vielen Optimierunsschleifen und entsprechend hohem Zeitaufwand versucht, eine Optimierung der Beflammparameter zu erreichen. Da mit den Tasttinten die oberflächenenergie nur stellenweise und manuell aufwändig bestimmt werden kann, sind Testtinten nur bei beflammten Bauteilen mit einfacher Geometrie, wie Platten, für eine zuverlässige Bestimmung der oberflächenenergie geeignet. Für große Bauteile mit komplizierter Geometrie, beispielsweise Stoßfänger, sind Testtinten hingegen nur eingeschränkt verwendbar.

Bei solchen Bauteilen muss daher zusätzlich eine Lackhaftungsprüfung durchgeführt werden. Dazu wird das lackierte Bauteil einer Klimaprüfung nach DIN 50017 unterworfen und anschließend eine Haftungsprüfung durch Gitterschnittprüfung nach DIN EM ISO 24 DS der lackierten Bauteiloberfläche durchgeführt, wobei durch Schnitte ein Gitter durch den Lack bis zur Bauteiloberfläche gebildet wird, auf das ein Klebeband aufgeklebt und dann abgezogen wird, um Abplatzungen festzustellen. Bis ein endgültiges Ergebnis vorliegt, vergehen dazu oft wochen.

Diese aufwändigen Prüfungen können daher nur in begrenztem Umfang durchgeführt werden, so dass die Beflammroboter-Einstellung zu einem erheblichen Teil von der Erfahrung der Person abhängt, die den Roboter einstellt.

Auch treten beim Beflamnen im Serienprozess mit einem Beflammroboter unvermeidbar Schwankungen der Beflammungsparameter auf, so werden die Bauteile, z.B. Stoffänger, auf Gestellen zum Beflammroboter transportiert. Da die Abmessungen der Gestelle und die Lage der Stopfänger auf dem jeweiligen Gestell schwanken kann, ändert sich auch der Abstand des Beflammkopfes von Bauteil. Vor allen an Krümmungen des Bauteils Kann damit dieser Abstand die für eine ausreichende Beflammung erforderliche Grenze überschreiten. Auch kann sich beispielsweise die Flammeneinstellung mit der Zeit ändern.

Eine unzureichende oberflächenaktivierung der Bauteiloberfläche durch Beflammen wird daher im Serienprozess oft erst erkannt, wenn bereits viele Bauteile mit Qualitätsmängeln gefertigt worden bzw, verbaut sind.

Aus DE 201 14 099 01 ist ein Verfahren nach dem oberbegriff des Anspruchs 1 bekannt. Zur Messung der Temperatur wird ein mit einer Messoptik versehemer Infrarot-Temperatursensor verwendet, dessen signal, wenn er über die beflammte Bauteiloberfläche bewegt wird, an vertiefungen, Löchern und dergleichen einbricht, sodass die von ihm gemessenen Temperatur zwischen 20 und mehr als 300°C schwankt. Eine sichers Haftung das Lacke an einem Polyolefin-Bauteil ist damit nicht gewährleiset. Aus Zenkiewics M. "FLAME MODIFICATION OF THE SURFACE LAYER OF PLASTICS PRODUCTSZ, International Polymer Science and Technology, RAFRA TECHNOLOGY, SHREWABURY, GB, Bd. 27, Nr. 7, 1, Januar 2000 (2000-01-01), Seite T/86/T/93, XP000975407 ist es bekannt, ein Kunststoffbauteil, beispielsweise aus Polyolefin, zur Oberflächenaktivierung mit einem konstanten Mischungsverhältnis des Gas/Luft-Gemischs zu beflammen.

Aufgabe der Erfindung ist es, beim Beflammen eine ausreichende Oberflächenaktivierung des Bauteils sicherzustellen.

Dies wird erfindungsgemäß mit dem im Patentanspruch gekennzeichneten Verfahren erreicht.

Der Erfindung liegt die Erkenntnis zugrunde, dass zwischen der beim Beflammen erzeugten oberflächentemperatur und der Oberflächenenergie das kunststoffbauteile eine so engt Korrelation besteht, dase eine Mindestemperatur der Bauteiloberfläche beim Beflammen einer ausreichenden Oberflächenenergie entspricht. Voraussetzung für eine ausreichende Korrelation ist, dass die Gaszusammansetzung bzw. das Mischungsverhältnis des Gas/Luft-Gemisches konstant gehalten wird.

Mit dem erfindungsgemäßen Verfahren kann die Oberflächenaktivierung eines Kunststoffbauteils kontrolliert, d.h. gemassen und gesteuert und gegebenenfalls auch geregelt werden.

Die oberflächenenergie, die an der Bauteiloberfläche erzeugt werden muss, wird durch die Haftung bestimmt, die zwischen der Bauteiloberfläche und der Beschichtung erforderlich ist, die auf das Bauteil aufgebracht wird. So ist beispielsweise eine Mindestcherflächenergie von 40 mN/m und wehr erforderlich, wann das Bauteil, s.B. ein Stoßfänger, aus einem Polypropylen-Kunststoff mit einer Lackierung versehen wird.

Erfindunsgemäß wird die Bauteiloberfläche auf eines Temperatur erhöht, die zwischen der Mindesttemperatur und einer Höchsttemperatur liegt. Es konnte nämlich festgestellt werden, dass die oberflächenenergie wieder abnimmt, warm eine Höchsttemperatur überschritten wird. Dieses überraschende Ergebnis ist möglicherweise darauf zurückzuführen, dass, wenn eine zu hohe Temperatur erreicht wird, der Kunststoff an der oberfläche erweicht, Wodurch sich die beim Beflammen gebildeten funktionellen Gruppen umorientieren oder die Kunststoffoberfläche durch zu starke thermische schadigung der Polymerketten oberflächlich verbrennt.

Zur Einhaltung der Mindesttemperatur bzw. der Mindesttemperatur und der Höchsttemperatur, wird daher nach der Erfindung die Oberflächentemperatur des Bauteils beim Beflammen überwacht. Wird die Mindesttempartur unterschritten, wird die Flammeneinwirkung auf das Bauteil erhöht; wird die Höchsttemperatur überschritten, wird sie, herabgesetzt. Dazu kann wenigstens einer der Parameter. Abstand der Flamme vom Bauteil, Dauer der Einwirkung der Flamme und Durchsatz des Gas/LuftGemisches entsprechend geändert bzw. geregelt werden. Das Mischungsverhältnis Gas/Luft muss konstant bleiben. Bei einer Online-Überwachung wird vorzugsweise die Leistung des Brenners (Durchsatz Gas/Luft-Gemisch) geändert, da dazu lediglich ein Ventil oder dergleichen Absperrorgan betätigt bzw. geregelt werden muss.

Nach der Erfindung wird durch Temperaturmesung der oberfläche des Bauteils eine zu geringe Oberflächenaktivierung sofort erkannt, so dass unverzüglich korrekturmaßnahmen eingeleitet werden können. Dadurch wird die Prozesseicherheit beim Beflammen deutlich verbessert und der Qualitätsstadart höht. Ausschussteile können deshalb weitgehend vermieden werden. Zudem wird verhindert, dass qualitativ unzureichende Teile verbaut werden. Schließlich werden Feldreklamationen verhindert. Darüber hinaus ergibt sich ein erhabliches Einsparpotential gegenüber den derzeit erforderlichen aufwändigen Laborprüfungen.

Die Bestimmung der Temperatur der Oberfläche des Bauteils erfolgt durch Thermographie.

Die Thermographie beruht darauf, dass das beim Beflammen erwärmte Bauteil aufgrund seiner Eigentemperatur Strahlung im infraroten Wellenlängenbereich emittiert und die abgestrahlte Leistung gemassen wird, normalerweise auf eine oder mehrere bestimmte Wellenlängen beschränkt. Dazu wind eine Infrarotkamera verwendet. Mit ihr kann die von dem Bauteil abgestrahlte Wärme bildhaft erfasst werden. Die auf den Detektor der Infrarotkamera auftraffende Wärmestrahlung ruft im Detektor eine elextrische Spannungsänderung proportional zur Strahlungsmenge hervor. Mittels Kalibrierkurven kann diese in einen Temperaturwert umgerechnet werden.

Die Mindesttemperatur und die Höchsttemperature der Bauteiloberfläche beim Beflammen kann auf einfache Weise ermittelt werden. Dazu können z.B. Platten aus dem jeweiligen Kunststoff als Probekörper verwendet werden. Mehrere Platten werden durch Beflammen auf unterschiedliche Oberflächentemperaturen erwärmt. Die Oberflächenspannungen der Platten können durch die eingangs erwähnte Testtintenprüfung ermittelt werden. Wenn eine Oberflächenspannung der Platte ermittelt wird, von der bekannt ist, dass sie zu einer ausreichenden Haftung z.B. der Lackierung auf dem betreffenden Kunststoff führt, ist bei der Beflammung eine oberflächentemperatur erreicht worden, die mindestens der Mindesttemperatur bzw. höchstens der Höchsttemperatur entspricht.

Es kann eine Online- oder Inline-Prozessüberwachung beim Beflammen hinsichtlich einer gansflächig ausreichenden Oberflächenenergie der Kunststoffoberfläche im Serienprozess durchgeführt werden.

Um mit der Infrarotkamera die Temperatur der Oberfläche des Bauteils möglichst genau zu erfassen, die sie beim Beflammen erreicht, wird vorzugsweise die Intrarotkamera synchron mit dem Brenner über die beflammte Bauteiloberfläche bewegt. Dazu kann die kamera an dem Bewegungsorgan, beispielsweise dem Arm befestigt sein, mit dem der Brenner des Beflammroboters über die zu beflammende Beuteiloberfläche bewegt wird.

Das erfindungsgemäße Verfahren ist zur vollflächigen Bestimmung der Oberflächenaktivierung von kungtstoffbauteilen, aus Polyolefin bestimmt. Dabei kann es sich z.B. um Propylenhomo- oder -copolymere oder Gemische von Propylenhomo- oder -copolymeren mit anderen Polyolefinen, beispielsweise EPDM, handeln.

Die beigefügte Zeichnung dient der weiteren Erläuterung der Erfindung. Darin zeigen:
- Figur 1: schematisch eine Versuchsanordnung zum Beflammen und Messung der Oberflächentemperatur durch Ther- mographie, und
- Figur 2: ein Diagramm, das die Abhängigkeit der Oberflä- chenspannung von der Oberflächentemperatur beim Beflammen darstellt.

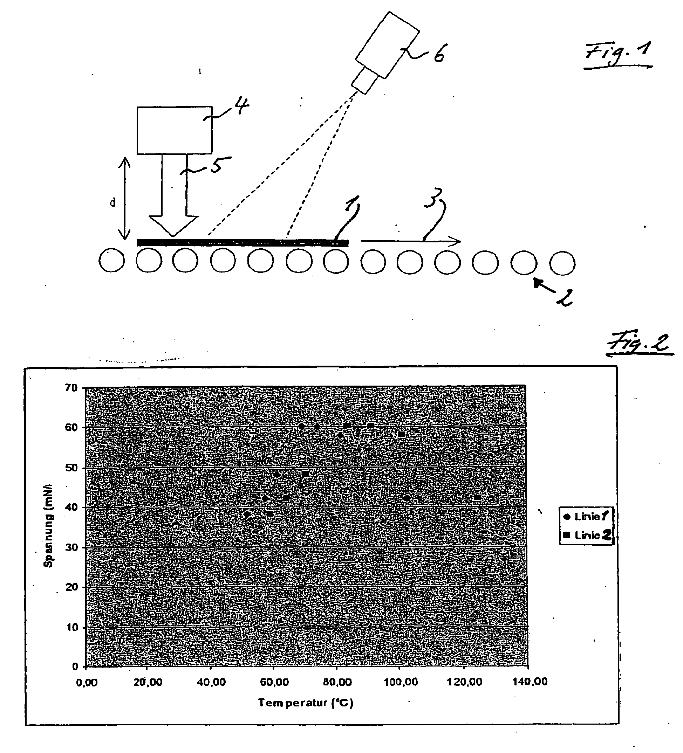

Die Versuchsanordnung nach Figur 1 dient der Untersuchung, ob die mittels Thermographic gemessene Bauteiloberflächentamperatur und die Oberflächenspannung korrelieren.

Dabei wird ein plattenförmige Probe 1, die auf einem Förderband 2 in Richtung des pfeiles 3 bewegt wird, mit dem Heflammkopt mit einer Flamme 5 beflammt. Unmittelbar nach dem Beflammvorgang wird die Oberflächentemperatur mit der Infrarotkamera 6 erfasst.

Die beim Beflammen erreichte, mit der Infrarotkamera 6 gemessene Temperatur wird durch Änderung der Geschwindigkeit v des Pörderbands 2 bzw. Änderung des Gasdurchsatzes (Brennerleistung) bzw, des Abstands d des Beflammkopfes 4 von der Probe 1 geändert und die jeweils erzeugte Oberflächenenergie nach der eingangs erwähnten Testtintenmethods bestimmt.

In Figur 2 ist die Abhängigkeit der Oberflächenspannung von der Oberflächentemperatur bei Variation der Geschwindigkeit v des Förderbands 2 dargestellt. Es sind die Messergebnisse von zwei Auswertelinien dargestellt.

Es ist ersichtlich, dass die Oberflächenspannung bei einer Oberflächentemperatur von etwa 70 °C bin 90 °C mit etwa 50 mN/m bis 60 mN/m am größten ist, während sie bei einer Oberflächentemperatur von weniger als 70 °C und bei 100 °C stark abfällt.

## Patentansprüche

1. Verfahren zur Kontrolle der Oberflächenaktivierung eines Kunststoffbauteils, das mit einer Lackierung versehen wird, durch Beflammen mit einem Brenner, der über die zu beflammende Bauteiloberfläche bewegt wird, wobei die Temperatur der beflammten Bauteiloberfläche ermittelt wird, wobei die Flammeinwirkung auf das Bauteil bei Unterschreizen der Mindesttemperatur erhöht bzw. bei Überschreiten der Höchsttemperatur herabgesetzt wird, und die Temperatur der Bauteiloberfläche durch Thermographie bestimmt wird, **dadurch gekennzeichnet, dass** das Kunststoffbauteil aus einem Polyolefin besteht, dass die Oberflächenenergie, die für die Haftung zwischen der Bauteiloberfläche und der Lackierung erforderlich ist, bestimmt und eine Mindesttemperatur und eine Höchsttempertur zur Erzeugung der erforderlichen Oberflächenenergie ermittelt wird, auf die die Bauteiloberfläche beim Beflammen erwärmt wird, dass bei konstantem Mischungsverhältnis des Gas/Luft-Gemisches die Flammeneinwirkung mit dem Durchsatz des Gas/LuftGemisches eingestellt wird und dass zur Thermographie eine Infrarotkamera verwendet wird, welche synchron mit dem Brenner über die beflammte Bauteiloberfläche bewegt wird.

## Claims

1. A method of monitoring the surface activation of a plastics material component which is being painted, by flaming with a burner moved over the surface of the component for flaming, wherein the temperature of the flamed surface is determined, wherein the action of the flame on the component is increased when the temperature falls below the minimum and reduced when the temperature is above the maximum, and the temperature of the surface is determined by thermal imaging, **characterised in that** the plastics material component is made of a polyolefin, the surface energy needed for adhesion between the component surface and the paint is determined, and a minimum temperature and a maximum temperature for producing the required surface energy is obtained and the surface of the component is heated to it when flamed, the action of the flame is adjusted via the flow rate of the gas/air mixture while keeping the proportions of gas to air in the mixture constant, and thermal imaging is effected with an infrared camera which is moved over the flamed surface in synchronism with the burner.

## Revendications

1. Procédé de contrôle de l'activation de la surface d'une pièce en matière plastique destiné à recevoir une peinture, par flammage avec un brûleur déplacé sur la surface de la pièce à flammer, procédé selon lequel,
* on détermine la température de la surface de la pièce à flammer,
* on augmente l'effet de la flamme sur la pièce en cas de dépassement vers le bas de la température minimale ou on réduit l'action en cas de dépassement de la température maximale, et on détermine la température de la surface de la pièce par thermographie,
procédé **caractérisé en ce que**
- la pièce en matière plastique est en une polyoléfine,
- on détermine l'énergie de surface nécessaire à l'accrochage entre la surface de la pièce et la peinture, et
- on détermine une température minimale et une température maximale pour générer l'énergie de la surface requise à laquelle on chauffe la surface de la pièce par flammage,
- pour un rapport de mélange constant du mélange gaz-air, on règle l'action de la flamme par le débit du mélange gaz-air, et
- pour la thermographie, on utilise une caméra infrarouge déplacée en synchronisme avec le brûleur sur la surface de la pièce à flammer.
